# EUROPEAN PATENT SPECIFICATION

(11) **EP 4 228 791 B1**
(45) Date of publication and mention of the grant of the patent: **27.11.2024**
(21) Application number: 21801627.7
(22) Date of filing: 12.10.2021
(51) Int. Cl.: B01D 53/60

(54) **WET-OXIDATION SCRUBBING OF SOX AND NOX DERIVING FROM FLUE-GAS USING SODIUM CHLORITE AQUEOUS SOLUTIONS**
NASSOXIDATIONSWÄSCHE VON SOX UND NOX AUS RAUCHGASEN UNTER VERWENDUNG WÄSSRIGER NATRIUMCHLORITLÖSUNGEN
ÉPURATION PAR OXYDATION HUMIDE DE SOX ET DE NOX PROVENANT DE GAZ DE COMBUSTION À L'AIDE DE SOLUTIONS AQUEUSES DE CHLORITE DE SODIUM

(30) Priority: 15.10.2020 IT 202000024397
(43) Date of publication of application: 23.08.2023
(73) Proprietor: Boldrocchi S.r.l., 20853 Biassono (MB) (IT)
(72) Inventor: FLAGIELLO, Domenico, 80014 Giugliano in Campania NA (IT); DI NATALE, Francesco, 80078 Pozzuoli NA (IT); ERTO, Alessandro, 80078 Pozzuoli NA (IT); LANCIA, Amedeo, 80126 Napoli NA (IT)
(74) Representative: Perani & Partners S.p.A.
(86) International application number: PCT/IB2021/059345
(87) International publication number: WO 2022/079596

(56) References cited:
- CN-A- 106 984 161
- CN-A- 110 433 622
- DE-C1- 3 816 532
- US-A1- 2018 257 032
- US-A1- 2019 224 616
- US-B2- 8 012 438

## Description

### Technical field

The present invention relates to the process of oxidation scrubbing with aqueous solutions to reduce SOₓ and NOₓ emissions in a flue-gas. In particular, the invention proposes the methodology and the plant solution to improve this process, in terms of performance, control of by-products and reduction of the overall dimensions and weights required for the installation. Furthermore, the plant solution is aimed at solving the problems related to the treatment and management of the flushing waters generated by the process.

The proposed invention is within the scope of the treatment of flue gases deriving from various industrial activities, such as power plants, cement factories and incinerators, and for the purification of exhaust gases from heavy-duty diesel engines, including those used for ship and rail propulsion and for on-board auxiliary services.

### Prior art

In recent years, National Governments in several countries have enacted new environmental regulations in order to reduce polluting emissions and ensure adequate quality standards for human health and the biosphere in general. In the field of atmospheric pollution control, many of these rules concern the control of emissions of sulphur oxides, SOₓ, and nitrogen oxides, NOₓ, related to industrial plants and energy production from fossil fuels and biomass. Many countries have also ratified the guidelines promulgated by the International Maritime Organisation (IMO) that defined emission limits for SOₓ and NOₓ in ship engine exhaust. These limits are expressed respectively in terms of the permissible sulphur content in fuels and the permissible NOₓ emission factors, in g/kWh, per engine type. Particularly restrictive rules apply in some marine areas called "Emission Control Areas" and in the territorial waters of many countries.

SOₓ emissions can be limited and almost eliminated by using low-sulphur fuels, which are typically more expensive and not always available. NOₓ emissions can be controlled by making appropriate improvements to combustion systems which are thus more expensive and complex to maintain. Alternatively, purification plants for the exhaust gases produced by combustion for the treatment of SOₓ and NOₓ are widely used. Among the most widely used processes are dry-scrubbers and spray-dryers or wet-scrubbers for SOₓ capture and catalytic NOₓ reduction units "Selective Catalytic Reduction" (SCR) or thermal ones "Selective Non-Catalytic Reduction" (SNCR).

In general, the combined use of these units for SOₓ and NOₓ reduction is very costly for reasons linked to installation and running costs, but also to the overall dimensions and weight required for the installation of auxiliary units. Overall dimensions and weight issues are very limiting, especially in the case of retrofitting existing plants and of treatment of the exhaust gases of heavy-duty diesel engines, including those used for propulsion and the auxiliary systems of ships or railways.

A promising alternative to the combined treatment of SOₓ and NOₓ from flue-gases is the wet-oxidation scrubbing technology. Unlike traditional technologies that include the use of sea water or the addition of alkalis or carbonates for SOₓ capture alone, this process involves the installation of a single unit (a wet scrubber column) fed with a stream of dissolved oxidising reagent-based liquid for exhaust gas flushing.

This technology enables SOₓ and NOₓ to be captured simultaneously by transferring them from the gas to the absorbing liquid in the form of sulphates and nitrates following oxidation reactions by the oxidising reagent. One of the best oxidisers is sodium chlorite (NaClO₂), not only because of its strong oxidising capacity and the low market price, but also because of its stability in contact with air and light and also because it is easy to transport, being available in solid form.

Already existing patents (and patent applications) use wet-oxidation scrubbing techniques in flushing columns operating with sodium chlorite aqueous solutions as the oxidising agent (see, for instance, CN 106984161 A).

US 8,012,438, B2 refers to a flushing column operating with sodium chlorite solutions and shows that SO₂ and NO are completely removed with a dosage of 0.005 M ClO₂⁻ but only 60% of NOₓ is captured. No information is available on the treatment of contaminated flushing waters and whether chlorine gas is present at the outlet from the system.

US 8,242,324, B2 refers to a flushing column split into three sections: in the first one, SO₂ is removed with the injection of basic solutions; in the second one, NOₓ is oxidised with sodium chlorite-based solutions; in the third one, the final flushing takes place with the capture of residual acid gases (generally chlorine gas and NO₂). No reference is made in the document to the content of pollutants and to the dosage of oxidant used, and no information is available on the treatment of contaminated flushing waters.

Both US 8,012,438 and US 8,242,324 have studied the influence of the process on the capture of mercury in the flue-gas and have confirmed that high removals of Hg^{(°)} and Hg^{(II)} can be achieved in the presence of NaClO₂ in the flushing solution.

It appears that the current patented solutions do not provide any information on the optimisation of the consumption of the reagent used and on the management of the plant's flushing effluents, nor do they provide for the removal of the chlorine-based by-products generated during the wet-oxidation process of SOₓ and NOₓ.

The object of this invention is to provide a plant solution capable of reducing both SOₓ and NOₓ up to a few parts per million and at the same time of improving the management of the oxidising reagent in terms of consumption; to control the generation of any by-products formed during the wet-oxidation process; to also manage the effluents produced by the flushing unit to obtain a liquid with characteristics that are potentially suitable for the production of nitrogen-based fertilisers.

### Summary of the invention

A first object of the following invention is to provide a process for the treatment of a gas containing SOₓ and NOₓ as claimed in the appended claims that describe preferred variants of the invention, forming an integral part of the present description.

The process generally comprises a main step in which the contaminated gas is brought into contact with a stream of oxidant-based liquid (chlorite, ClO₂⁻), in order to ensure efficient purification of the gas from Oₓ and NOₓ and an efficient conversion of the chlorite ions into chloride ions (Cl⁻) in the discharged flushing liquid. This step involves a multi-phase contact stage with recycling, endowed with purging and make-up of the absorbing liquid. The process includes ancillary units for the refinement of the exhaust gases and the treatment of washing waters.

The invention proposes a plant according to claim 10, the plant generally comprising the following equipment
- A mixing unit M-1
- A first gas treatment unit S-1 and a second unit S-2 for the pre-treatment of the exhaust liquids of the S-1
- A treatment unit F-1 for the treatment of exhaust liquids
- Distribution valves for the gas SV-2 and the liquid SV-3 and optionally
- A third unit S-3 for the refinement of the gases produced by the S-1
- Distribution valve of the liquid SV-1
- A mixing unit M-2
- Thermal recovery unit of the gas C-1

In particular, the plant according to the invention comprises:
- A mixing unit M-1 comprising mixing means for preparing the stream of oxidising reagent L₀₁₋₁ starting from: solid reagents, an aliquot of mains water or sea water L₀₁ fed to the plant, the liquid stream of recirculating reagent L₀₁₋₃. The aliquot L₀₁ could optionally be derived from splitting the mains water or sea water L₀ entering the plant into two aliquots by means of the optional distribution unit SV-1: a first aliquot L₀₁ and a second aliquot L₀₂. The liquid stream of recirculating reagent L₀₁₋₃ is an aliquot deriving from splitting the liquid L₀₁₋₂ at the outlet from a first treatment unit S-1. The stream of oxidising reagent-based liquid L₀₁₋₁ so prepared, being withdrawn from the mixing unit M-1, is sent to said first treatment unit S-1;
- Means for splitting the flow of gas G₀ entering the plant by means of distribution unit SV-2 into a first aliquot of gas G₀₁ and a second aliquot of gas G₀₂ and means for sending said first aliquot G₀₁ to said first treatment unit S-1 and said second aliquot G₀₂ to a second treatment unit S-2;
- Means for entering the two flows of gas G₀₁ and G₀₃ into the first treatment unit S-1, means for withdrawing the liquid stream of oxidising reagent L₀₁₋₁ from the mixing unit M-1 and for entering this one into the first treatment unit S-1;
- Means for withdrawing treated gas G₀₄ and treatment liquid L₀₁₋₂ from the first treatment unit S-1;
- Distribution means for splitting the treatment liquid L₀₁₋₂ by means of distribution unit SV-3 into a first aliquot L₀₁₋₃ and into a second aliquot L₀₁₋₄, means for sending said first aliquot L₀₁₋₃ to the mixing unit M-1 and means for sending the second aliquot L₀₁₋₄ to a second treatment unit S-2;
- Means for withdrawing treatment liquid L₀₁₋₅ from the second treatment unit S-2;
- Means for withdrawing treated gas G₀₃ from the second treatment unit S-2 and means for sending said gas G₀₃ to the first treatment unit S-1 for further treatment in said unit.
and optionally:
- Means for withdrawing the stream of gas G and for sending it to the thermal recovery unit C-1 and means for sending the gas G₀ at the outlet from C-1 to the distribution unit SV-2;
- Means for withdrawing treated gas G₀₄ from the first treatment unit S-1 and means for sending said gas G₀₄ to be further refined in the unit S-3 before discharge into the environment;
- An optional mixing unit M-2 comprising means for preparing the enhanced stream of liquid L₀₂₋₁ starting from: solid reagents (e.g. strong bases) and an aliquot of mains water or sea water L₀₂ withdrawn from the optional distribution unit SV-1. The stream L₀₂₋₁ so prepared, being withdrawn from the mixing unit M-2, is sent to said refining unit S-3 to come into contact with the stream G₀₄.

The plant can be constituted by a single column in three sections or by three separate columns, connected with per se known construction methods. More specifically, the process underlying the invention comprises the following fundamental steps:
(i). Preparing the oxidising reagent in a mixing unit M-1 fed at the inlet by an aliquot of chemical reagents, an aliquot of mains water or sea water L₀₁ and an aqueous stream of recirculating reagent L₀₁₋₃. The mains water aliquot L₀₁ derives from splitting the mains water or sea water L₀ entering the plant into two aliquots: first aliquot L₀₁ and second aliquot L₀₂ of mains water or sea water (optional). The oxidizing reagent, being withdrawn from the mixing unit M-1 as a stream of oxidising reagent-based liquid L₀₁₋₁. This stream L₀₁₋₁ is sent to a first treatment unit S-1;
(ii). Splitting the flow of gas entering the plant G₀ into a first aliquot G₀₁ and a second aliquot G₀₂ and sending the first aliquot G₀₁ to the first treatment unit S-1 and the second aliquot G₀₂ to a second treatment unit S-2;
(iii). Bringing the first aliquot of gas G₀₁ and the flow of gas G₀₃ coming from the treatment unit S-2 into contact with the aqueous stream of oxidising reagent L₀₁₋₁, withdrawn from the mixing unit M-1 and which feeds the first treatment unit S-1;
(iv). Withdrawing at the outlet from the first treatment unit S-1 the treated gas G₀₄ and the treatment liquid L₀₁₋₂ containing the absorbed sulphur and nitrogen compounds and chlorine following contact with the total flow of exhaust gases G₀₁ and G₀₃;
(v). Splitting the treatment liquid L₀₁₋₂ coming from the unit S-1 into a first aliquot L₀₁₋₃, which is recirculated by sending it to the mixing unit M-1 and into a second aliquot L₀₁₋₄, which is sent to a second treatment unit S-2, where it is placed into contact with the second aliquot of gas G₀₂;
(vi). Withdrawing, at the outlet from the treatment unit S-2, the treatment liquid L₀₁₋₅, and the stream of gas G₀₃ which is sent to the first unit S-1 together with the stream G₀₁.

Another object of the invention is to purify the liquid L₀₁₋₅ at the outlet from the unit S-2, which is treated with ferrous salts in a basic environment in a treatment unit called F-1 (clarification-flocculation unit or activated carbon adsorption unit). The liquid stream L₀₁₋₆ at the outlet from the unit F-1 will have potentially suitable characteristics (in terms of sulphates SO₄²⁻, nitrates NO₃⁻ and chlorides Cl⁻) for use in nitrogen-based fertiliser production processes.

A further object is to refine the stream G₀₄ at the outlet from the treatment unit S-1 using a further gas flushing section, called refining unit S-3, fed with mains water or sea water, and possibly enhanced with strong bases. This unit is optional and should only be used if the exhaust gas G₀₄ contains chlorine-based contaminants, which are formed during the oxidation process in the treatment unit S-1. It is specified that the addition of strong bases to the stream L₀₂ is optional and is carried out in a mixing unit M-2 where the preparation of the enhanced stream of liquid to be sent to the unit S-2 takes place.

Other objects, embodiments and advantages of the present invention are discussed in the following detailed description and in the appended claims.

### Brief description of the figures

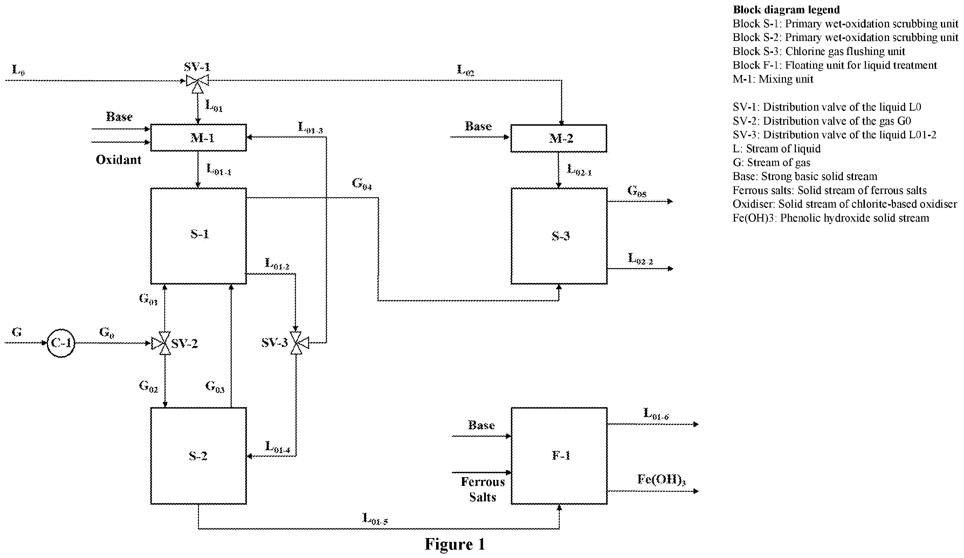

The invention is described below on the basis of non-limiting examples illustrated by way of example in the following **Figure 1****.**

**Figure 1** is a schematic view of an apparatus for implementing the present invention and shows the flow diagram of the exhaust gas treatment plant, comprising a gas treatment unit S-1, a refining unit S-3 (optional) and a flushing water treatment section, comprising two treatment units S-2 and F-1.

### Detailed description of the invention

The present invention relates to a plant for the treatment of SOₓ and NOₓ present in flue-gases coming from industrial activities or heavy duty diesel engines, including those for ship and railway applications. The simultaneous capture of SOₓ and NOₓ is based on a wet-oxidation process involving flushing with a stream of chlorite-based oxidising liquid (e.g. solid sodium chlorite NaClO₂₍ₛ₎).

The proposed invention is based on certain operations necessary to improve the existing processes, such as:
- Use of a recirculation liquid stream of oxidising reagent L₀₁₋₃ at a first exhaust gas treatment unit S-1 in order to simultaneously optimise: the consumption of oxidising reagent NaClO₂₍ₛ₎; the reduction of the flow rate of effluent L₀₁₋₄ destined for the flushing water treatment section S-2 and F-1; the increase in the content of sulphates SO₄²⁻, nitrates NO₃⁻ and chlorides Cl- in the flushing waters intended for the production of nitrogen-based fertilisers (if the effluent does not contain any additional impurities).
- Use of a treatment system for the effluents coming from the first treatment unit S-1, consisting of two units, S-2 and F-1, to convert all compounds based on chlorine dissolved therein into chlorides (Cl⁻). The unit F-1 is optional and only required if the residual chlorite content in the solution is above a threshold value which, for example, the World Health Organisation identifies as 0.7 mg/L. The final liquid stream could potentially be suitable for the production of nitrogen-based fertilisers.
- Optional use of an additional refining unit S-3 for cleaning chlorine-based compounds that may be present in the exhaust gases at the outlet of the first treatment unit S-1.

The preferred plant solution according to the invention comprises two distinct sections for the treatment of the exhaust gases and of the flushing waters and an additional optional section for the refinement of the exhaust gases. In any case, the person skilled in the art, by combining the teachings of the present invention with his knowledge of the field, can easily identify the optimal operating conditions for operating the plant, which preferably comprises the following sections:
1) ***Main exhaust gas treatment section,*** consisting of a treatment unit S-1 fed by a flue-gas (G₀₁ and G₀₃) and a stream of liquid, mains water or sea water, based on oxidising reagent L₀₁₋₁, e.g. sodium chlorite NaClO₂₍ₛ₎. This process can be carried out with various contact systems such as, for example, spray columns, filling bodies or plates. The choice of the contact system between the gaseous and liquid phases is selected on the basis of the optimisation of the consumption of the oxidising liquid required for the flushing process, minimising pumping costs and also the spaces and weights required for installing the unit. The proposed invention provides for the use of a flushing column S-1, described in detail below, operated in a closed circuit, in which a recirculation stream L₀₁₋₃ is fed to the column S-1, after addition of a liquid make-up stream L₀₁, in which the chlorite oxidising reagent, preferably sodium chlorite NaClO₂₍ₛ₎, and the basic reagent for controlling the pH value are present. The stream L₀₁₋₂ at the outlet from S-1 will be split to form a recirculation stream L₀₁₋₃ and effluent purge stream L₀₁₋₄, specified below. This operation simultaneously allows to optimise: the consumption of reagent ClO₂⁻, to minimise the flow rate of effluent destined for the additional treatment section S-2; to reduce the relative costs of the auxiliary units; to increase the content of sulphates SO₄²⁻, nitrates NO₃⁻ and chlorides Cl₋ dissolved in L₀₁₋₄ due to the recirculation of the stream L₀₁₋₃.
*2) **Flushing water treatment and management section:*** This section is delegated to the treatment of the effluents L₀₁₋₄ coming from the first unit S-1 (main section). The effluents are conveyed to the treatment unit S-2 and treated to reduce the content of chlorine-based compounds such as chlorites ClO₂⁻, chlorates ClO₃⁻, chlorine Cl₂ and chlorine dioxide ClO₂ in the liquid effluent stream L₀₁₋₄. The process can be carried out with different gas-liquid contact systems, such as spray columns, filling bodies or plates. The same reasons listed in point 1) for the choice of the type of column can also be extended to the flushing column S-2. The flushing waters at the outlet from S-2 are then treated in a treatment unit F-1 with a clarification-flocculation process by adding ferrous salts (such as FeCl₂ or FeSO₄) and basic reagents (such as NaOH), [S. Sabrina and C. Collivignarelli ("Chlorite removal with ferrous ions. " Desalination 176.1-3 (2005): 267-271*)].* The solid-liquid contact takes place in a tank with stirring systems and the separation of the two phases is achieved by the appropriate design of the solid-liquid separator based on estimated liquid holding times. Alternatively, the treatment F-1 can be carried out by means of activated carbons, which exploit the adsorbing and reducing capacity of these materials [S. Sabrina and C. Collivignarelli ("Chlorite removal with granular activated carbon. " Desalination, 176 1-3 (2005): 255-265*)*]*.*

The treatment for flushing waters proposed in the invention proposes a conversion of the effluent L₀₁₋₄ at the outlet from S-1 into effluent L₀₁₋₅ reusable in other industrial processes, achieving a reduction in costs related to the treatment and management operations of the traditional flushing effluents coming from exhaust gas treatment plants. All chlorine-based compounds are converted into chlorides Cl⁻ and the effluent will have potentially suitable characteristics (in terms of sulphates SO₄²⁻, nitrates NO₃⁻ and chlorides Cl⁻) for use in nitrogen-based fertiliser production processes. If the gas to be treated in the oxidative scrubbing process contains sufficiently low levels of powders, volatile organic compounds and metals, the purified effluent can guarantee sufficient concentrations of sulphates, nitrates and chlorides such that they can be considered for use for the production of nitrogenous fertilisers. The ferric hydroxide salts Fe(OH)₃₍ₛ₎ formed during the flocculation process can be marketed for the purification of waters polluted by arsenic and phosphates. *3) **Optional exhaust gas refining section:*** also the treatment of gases containing chlorine-based compounds possibly present in the exhaust gas G₀₄ exiting the treatment system S-1 (main section) is managed according to the invention. This treatment is to be considered an improvement with respect to the old processes, which do not take into consideration the possible formation of secondary pollutants in the gas produced by oxidative washing columns. This section can be an additional flushing column S-3 fed by the exhaust gases G₀₄ at the outlet from the unit S-1 and by a fresh liquid stream L₀₂, consisting of water, also sea water, optionally additivated with a strong base to improve the capture of chlorine gases. The process can be carried out with different gas-liquid contact systems, such as spray columns, filling bodies or plates. The same reasons listed in point 1) for the choice of the type of column can also be extended to the flushing column S-3.

### Detailed description of the Plant Figure

In the following, to illustrate a preferred and non-limiting embodiment of the invention (also containing the optional equipment), reference will be made to **Figure 1****,** which will be clearer when combined with the following legend:
**S-1:** Primary unit for oxidative scrubbing of the total flow of gas G₀₁ and G₀₃, or more simply primary unit S-1 or first treatment unit S-1
**S-2:** Secondary unit for oxidative scrubbing of the gas G₀₂ with pre-treatment of the liquid L₀₁₋₄, or simply secondary unit S-2 or second treatment unit S-2
**S-3:** Optional refining unit for the gas G₀₄ coming from the unit S-1, or more simply refining unit S-3 or optional dechlorination unit S-3
**F-1:** Clarification-flocculation unit for treatment of the liquid L₀₁₋₅ coming from the treatment unit S-2
**M-1:** Mixing unit, which receives the streams L₀₁, L₀₁₋₃, NaClO₂₍ₛ₎ and the basic reagent, and prepares the liquid L₀₁₋₁ in its inside to be sent to the treatment unit S-1, or more simply mixing unit M-1
**M-2:** Optional mixing unit that receives the stream L₀₂ and the basic reagent and prepares the liquid L₀₂₋₁ in its inside to be sent to the refining unit S-3, or more simply optional mixing unit M-2
**C-1:** Cooling unit and/or optional thermal recovery unit for the gas G₀ entering the plant, or more simply optional thermal recovery unit
**SV-1:** First optional distribution valve of the total liquid L₀ entering the plant, or more simply, first optional distribution valve. The distribution rate at the valve SV-1 (r_{SV-1}) is intended as the ratio between two flow rates relative to the stream L₀₂ leaving the valve SV-1 and the stream L₀ entering SV-1 (r_{SV-1} = L₀₂/L₀)
**SV-2:** Second distribution valve of the total gas G entering the plant, or more simply, second distribution valve. The distribution rate at the valve SV-2 (r_{SV-2}) is intended as the ratio between two flow rates relative to the stream G₀₁ leaving the valve SV-2 and the stream G₀ entering SV-1 (r_{SV-2} = G₀₁/G₀)
**SV-3:** Third distribution valve of the liquid L₀₁₋₂ at the outlet from the unit S-1, or more simply, third distribution valve. The distribution rate at the valve SV-3 (r_{SV-3}) is intended as the ratio between two flow rates relative to the stream L₀₁₋₃ leaving the valve SV-3 and the stream L₀₁₋₂ entering SV-3 (r_{SV-3} = L₀₁₋₃/L₀₁₋₂). In this specific case, the distribution ratio r_{SV-3} can also be called the recirculation ratio at valve SV-3 because it indicates the fraction of stream called L₀₁₋₃ recirculated to the unit S-1, starting from the total stream L₀₁₋₂ entering SV-3. The distribution or recirculation ratio r_{SV-3} may vary from 0 to 1 (with value 1 not included because it represents the condition of total recirculation to the unit S-1 with zero make-up). The closer the value of this ratio is to 1, the more the flow rate of the final effluent L₀₁₋₆ is minimised, together with the consumption of chlorite-based oxidant.
**Base:** Stream of basic reagent in solid state (or in solution of known titre)
**Oxidant:** Chlorite-based oxidant stream in solid state (or in solution of known titre)
**Ferrous salts:** Stream of ferrous salts in solid state (or in solution of known titre) sent to the unit F-1
**Fe(OH)₃**: Ferric hydroxide stream produced in the sludge state at the outlet from the treatment unit F-1, also referred to as product stream exiting the plant
**L₀**: Total stream of liquid (natural water, including sea water) at the inlet to the plant. The temperature and the natural content of bicarbonate, sulphates, nitrates and chlorides of the stream L₀ are process variables
**L₀₁**: Stream of liquid at the outlet from the distribution valve SV-1 and sent to the unit M-1
**L₀₁₋₁**: Stream of liquid at the outlet from the unit M-1 and sent to the unit S-1. The pH of the stream L₀₁₋₁ is preferably comprised in the range 2-5, preferably 2-3, preferably 2-4, preferably 3-4, preferably 3-5, preferably 4-5, even more preferably ≤4-5 because the oxidation process of the gases in the unit S-1 is favoured at acidic pH. However, it is preferable for the pH to be >2-3 to avoid the development of chlorine gas (ClO₂ and Cl₂ which are catalysed by a strongly acidic environment) in the unit S-1 above the threshold values imposed by current local regulations. PH values of < 2 together with concentrations of chlorite-based oxidant >3% by weight would necessitate an increase in the water flow rate L₀₂ and/or an excessive consumption of basic reagent in M-2 for the treatment of G₀₄ in the unit S-3. It is also preferable for the stream L₀₁₋₁ to have a chlorite-based oxidant content < 3% by weight for safety reasons when handling and storing the stream.
**L₀₁₋₂**: Stream of liquid at the outlet from the unit S-1 and sent to the distribution valve SV-3. The stream has a pH < 3
**L₀₁₋₃**: Stream of liquid at the outlet from the distribution valve SV-3 and sent to the unit M-1, also referred to as recirculation stream to the unit S-1. The stream has a pH < 3
**L₀₁₋₄**: Stream of liquid at the outlet from the distribution valve SV-3 and sent to the unit S-2, also referred to as purge stream from the unit S-1. The stream has a pH <3
**L₀₁₋₅**: Stream of liquid at the outlet from the unit S-2 and sent to the unit F-1.

The stream has a pH < 3
**L₀₁₋₆**: Stream of liquid at the outlet from the unit F-1, also called stream of liquid at the outlet from the plant. The conversion of chlorites and other chlorine-based contaminants into the stream L₀₁₋₆ should be total and the stream L₀₁₋₆ should have the lowest possible flow rate. It represents the effluent of the entire plant to be stored, and has the appropriate characteristics for its reuse in nitrogenous fertiliser production processes (sulphate, nitrate and ammonium chloride). The maximum permissible content of dissolved solids (such as sulphates, nitrates and chlorides) should preferably be less than 80% by weight for a pH value comprised between 2 - 4 to avoid precipitation of the salts.
**L₀₂**: Stream of liquid at the outlet from the optional distribution valve SV-1 and sent to the optional refining unit S-3
**L₀₂₋₁**: Stream of liquid at the outlet from the optional unit M-2 and sent to the optional refining unit S-3
**L₀₂₋₂**: Stream of liquid at the outlet from the optional unit S-3, also called optional stream of liquid at the outlet from the plant. The stream L₀₂₋₂ is suitable for direct discharge if the pH value is > 6 and simultaneously respects the maximum permissible content of the chlorine-based contaminants according to the current regulations or the limits recommended by safety data sheets or the World Health Organisation (WHO).
G: Total stream of gas entering the plant. The flow rate of gas G to be treated in the plant together with its temperature and concentrations of SOₓ, NOₓ and H₂O (i.e. the relative humidity value) are process variables
**G₀**: Stream of gas at the outlet from the optional unit C-1 and sent to the distribution valve SV-2. The temperature of the gas G₀ after the optional unit C-1 is preferably ≤ 80°C.
**G₀₁**: Stream of gas at the outlet from the distribution valve SV-2 and sent to the unit S-1
**G₀₂**: Stream of gas at the outlet from the distribution valve SV-2 and sent to the unit S-2
**G₀₃**: Stream of gas at the outlet from the unit S-2 and sent to the unit S-1
**G₀₄**: Stream of gas at the outlet from the unit S-1 and sent to the unit S-3. The concentrations of SOₓ and NOₓ in the stream of gas G₀₄ must be in line with the specifications required at the exhaust of the diesel engine or industrial plant, according to the current regulations.
**G₀₅**: Stream of gas at the outlet from the optional unit S-3, also called total stream of gas at the outlet from the plant. The concentrations of SOₓ and NOₓ in the stream of gas must be in line with the specifications required at the exhaust of the diesel engine or industrial plant, according to the current regulations and, simultaneously, the concentrations of chlorine-based contaminants must be lower than those of the current regulations or, for example, the limits recommended by the safety data sheets.

Once the manipulable process variables have been set, which are:
- Flow rate and temperature and initial composition of the stream of gas G;
- Temperature of the stream of gas G₀ at the outlet from the thermal recovery unit C-1;
- Temperature, composition and pH of the total liquid L₀ at the plant inlet;
- Liquid-gas ratio at the unit S-1;
- PH value of the liquid L₀₁₋₁ at the inlet of the unit S-1;
- Flow rate of basic reagent at the inlet of the mixer M-2 (optional);
- Liquid-gas ratio at the unit S-3 (optional);
- PH value of the liquid L at the outlet from the unit F-1;
the person skilled in the art, on the basis of his experience and the present description, will be able to estimate the following calculated variables:
1. Heat recovered at the unit C-1;
2. Flow rate of G₀₁, G₀₂, G₀₃, G₀₄ and Gas with all their properties (temperature, relative humidity and species composition);
3. Total flow rate of water at the plant (L₀)
4. Flow rates of liquid L₀₁ and the flow rates L₀₁₋₁, L₀₁₋₂, L₀₁₋₃, L₀₁₋₄ and L₀₁₋₅ with all their properties (temperature, pH and composition of the dissolved species) except the pH of L₀₁₋₆ which is a variable preferably fixed in the range 2 - 4 and the dissolved solids content preferably < 80% by weight;
5. Flow rate of NaClO₂ and basic reagent at the unit M-1;
6. Flow rate of ferrous salts and basic reagent at the unit F-1;
7. Distribution to the optional valve SV-1;
8. Flow rate of L₀₂₋₂ with all its properties (temperature, pH and composition of the dissolved species)
9. Flow rate of Fe(OH)₃

The proposed list of manipulable and calculated variables appears to have only a value for demonstration and non-limiting purposes.

### Detailed description of the process including optional equipment

**Figure** 1 illustrates the entire flow diagram of the proposed process for the removal of SOₓ and NOₓ from flue-gases deriving from industrial activities, process plants and heavy-duty diesel engines, including those for ship and railway applications. The diagram in **Figure 1** shows the initial exhaust stream of gas G to be treated, which can be previously cooled to a temperature below 80 - 90 ° C in the thermal recovery system C-1.

After cooling, the exhaust gases G₀ are distributed into G₀₁ and G₀₂ in the distribution valve SV-2. The stream of gas G₀₁ is conveyed to the unit S-1 *(primary oxidation scrubbing unit)* whereas the stream of gas G₀₂ is sent to the unit S-2 *(secondary oxidation scrubbing unit).* Both units S-1 and S-2 can be equipped with different gas-liquid contact systems: spray systems, filling bodies and plates. The choice of the contact system is made on the basis of specific operating conditions and of process optimisation criteria which, together with the description of the invention and its technical knowledge, are within the reach of the skilled in the art. The unit S-1 is fed with a flow in counter-stream between the streams of gas G₀₁ and G₀₃ and the liquid stream L₀₁₋₁ coming from the mixing unit M-1. This is obtained by the mixing unit M-1 starting from: the recirculation stream L₀₁₋₃ exiting the distribution valve SV-3; the make-up stream L₀₁ (mains water or sea water) exiting the distribution valve SV-1; the oxidant stream containing chlorite, e.g. sodium chlorite NaClO₂₍ₛ₎; the strong base stream, e.g. NaOH or other strong base. The stream of liquid L₀₁₋₁ exiting M-1 and sent to the unit S-1 will have chemical-physical characteristics (in terms of composition, temperature and pH) that depend on the recirculation ratio fixed at the distribution valve SV-3, r_{SV-3} = L₀₁₋₃/L₀₁₋₂ (easily calculable by the person skilled in the art on the basis of his knowledge and the teachings of the present invention).

In preferential conditions, but not limited to them, the unit S-1 is equipped at the head with suitable sprayers for feeding the absorbing liquid (L₀₁₋₁). Above the nozzles, the unit S-1 is provided with a demister to prevent the possible formation of mists and the entrainment of acid droplets in the overhead gas discharge duct. The bottom of the unit S-1 will be dedicated to the collection of the flushing waters (L₀₁₋₂) and will be high enough to guarantee an obstruction of the gas passage in the pipe dedicated to the discharge of the spent flushing waters (L₀₁₋₂) from S-1. The exhaust gases G₀₁ and G₀₃ are fed through appropriate distributors. The wet-oxidation process, which takes place in the unit S-1 due to the contact of SOₓ and NOₓ with the stream of chlorite-based liquid L₀₁₋₁ can be described by the following global equations:

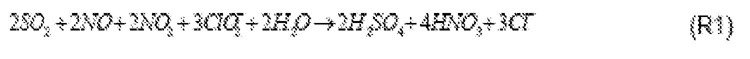

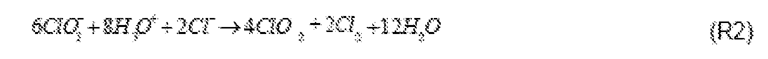

6*SO*₃+6*NO*+*NO*₂+5*ClO*₂+3*Cl*₂+15*H*₃*O*→6*H*₂*SO*₄+7*HNO*₃+11*HCl* (R3)

The reaction (R1) shows the oxidation of SOₓ and NOₓ by the chlorite ClO₂⁻with formation of sulphuric acid (H₂SO₄) and nitric acid (HNO₃). The reaction (R2) shows the decomposition of chlorite under acidic conditions generated by the progress of the reaction (R1), while the reaction (R3) shows a further oxidation step by additional oxidising agents such as chlorine dioxide ClO₂ and chlorine Clz, which are found to have similar or greater oxidising power than chlorite ClO₂⁻. The overall oxidation process will lead to the formation in the liquid of: sulphuric (H₂SO₄, Na₂SO₄, CaSO₄, etc.), nitric (HNO₃, NaNO₃, etc.) and hydrochloric (HCl, NaCl, CaCl₂, etc.) acids and salts. The stream of liquid L₀₁₋₂ at the outlet from S-1 will also be characterised by the presence of unreacted ClO₂⁻ (excess quantity) and other reaction products such as: ClO₃⁻, ClO₂ and Cl₂. The gas G₀₄ at the outlet from S-1 may contain contaminations of ClO₂ and Cl₂ desorbed from the liquid to the gas phase.

The invention proposed in the patent application is based on the use of a recirculation stream of the reagent L₀₁₋₃ to control the degree of acidity of the stream L₀₁₋₁ being fed to S-1, providing for a make-up stream of liquid L₀₁, recharged with the oxidising reagent NaClO₂₍ₛ₎, a strong base to control the pH of the liquid L₀₁₋₁ and a total purge stream L₀₁₋₄ to the system consisting of the units S-1 and M-1.

It can be seen from the reactions (R2) and (R3) that an increase in acidity provides a process improvement for the simultaneous capture of SOₓ and NOₓ.

The person skilled in the art will realise that the recirculation ratio "r_{SV-3}" can be increased to simultaneously optimise the consumption of oxidising reagent (NaClO₂₍ₛ₎) and the purge flow rate (L₀₁₋₄) to be sent to the effluent treatment section in order to achieve a predefined SOₓ and NOₓ capture level.

In contrast to conventional processes, where the level of gas conversion or capture efficiency is strongly influenced by the quantity of recirculated reaction by-products, this process can be carried out with a recirculation ratio r_{SV-3} at the valve SV-3 from 0 up to 0.997 without a significant negative influence on SOₓ and NOₓ capture. However, particular attention must be paid to phenomena of precipitation of the dissolved solids. A preferred range of the recirculation ratio r_{SV-3} at the SV-3 valve is 0.90-0.99 (validated by laboratory experiments).

Thus, according to a further embodiment of the process of the invention, in the case of a recirculation ratio r_{SV-3} equal to 0, the splitting of the stream L₀₁₋₂ into two separate currents L₀₁₋₃ and L₀₁₋₄ by means of the distribution valve SV-3 does not take place, so the stream L₀₁₋₃ is zeroed and the stream L₀₁₋₂ becomes 100% the stream L₀₁₋₄ sent to the unit S-2.

Another strength of this invention is the section related to the refining unit S-3 (*gas dechlorination unit*) in **Figure 1****,** which is provided for the secondary flushing of the gas from chlorine-based compounds (such as chlorine ClO₂ and chlorine Cl₂) possibly present in G₀₄ at the outlet from S-1.

**Figure 1** shows the optional dechlorination unit S-3 which can be equipped with different gas-liquid contact systems like for the units S-1 and S-2. The unit S-3 is fed by the exhaust gas G₀₄ and a stream of fresh liquid (mains water or sea water) L₀₂ coming from the distribution valve SV-1 which separates the total stream of water fed to the plant (L₀) into two different streams L₀₁ and L₀₂. The stream L₀₂ will have the same chemical and physical characteristics as L₀₁. However, the liquid L₀₂ used for gas refinement in S-3 can be enhanced by adding strong bases. **Figure** 1 shows the optional mixing unit M-2 used to prepare the enhanced stream of liquid L₀₂₋₁ starting from the stream of liquid L₀₂ and a basic reagent stream.

In general, the diameter of the unit S-3 will be similar to that of S-1 so as to be able to receive the same gas flow rate. The person skilled in the art will know that the diameter of the unit S-3 will also depend on the liquid flow rate being fed L₀₂, which will only be determined when the gas flow rate, the concentration of the species Cl₂ and ClO₂ to be removed and the packing height for the unit S-3 are defined.

The aim of this unit S-3 is: to obtain a clean gas Gas, already purified from SOₓ and NOₓ, in which any emissions of chlorine dioxide ClO₂ and chlorine Clz originated during the exhaust gas treatment according to the invention are reduced within the regulatory limits in force or to levels lower than the values suggested by the WHO or by the safety data sheets. Obtaining a content of chlorine compounds dissolved in the flushing waters L₀₂₋₁ within the regulatory limits of those recommended by WHO (ClO₂⁻<0.7 mg/L, ClO₃⁻<0.7 mg/L, ClO₂<0.8 mg/L and Cl₂<0.2 mg/L) and a pH > 6 for direct discharge can be achieved by flushing with water or aqueous solution additivated with a strong base by the stream of liquid L₀₂₋₁. The optional flushing process consisting in the refinement or dechlorination of the exhaust gases coming from S-1 is characterised by dismutation reactions of the chlorine gases into water as shown in the following equations:

*Cl*₂+ 3 *H*₂*O*→ 2*H*₂*O*⁺ + *ClO*⁻ + *Cl*⁻ (R4)

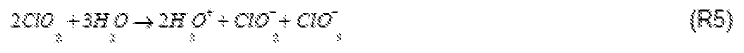

The flushing process shown in the reactions (R4) and (R5) is favoured by the addition of alkalis (basic reagents) to minimise the flow rate L₀₂ used in S-3. The dosage of the reagent will also be evaluated in order to obtain a pH > 6 for the discharge stream L₀₂₋₂.

**Figure 1** shows the section relating to the treatment and management of the flushing waters L₀₁₋₄ coming from the unit S-1. The liquid effluent treatment section consists of a first unit called S-2 which provides an initial conversion of the compounds into Cl⁻, and which is then completed in a second unit F-1.

The pre-treatment of the stream L₀₁₋₄ exiting the distribution valve SV-3 consists of a secondary oxidative flushing in the unit S-2. The flushing unit S-2 is fed by the liquid stream L₀₁₋₄ in counter-current to the stream of gas G₀₂ coming from the distribution valve SV-2. The stream G₀₂ has the same chemical and physical properties as the stream G₀₁. The pre-treatment of L₀₁₋₄ consists of decreasing the concentration of the oxidising species such as (ClO₂⁻, Cl₂ and ClO₂) by totally removing SOₓ and NOₓ in the stream of gas G₀₂, following the same reaction mechanisms seen in the equations (R1), (R2) and (R3). The stream of gas G₀₃ leaving the unit S-2 will be free of SOₓ and NOₓ but may contain ClO₂ and Cl₂ as contaminants. The stream G₀₃ is conveyed to the unit S-1 together with the stream of gas G₀₁. The liquid stream L₀₁₋₅ will contain a lower level of chlorine-based contaminants than L₀₁₋₄, and is subsequently conveyed to the last treatment step F-1.

The final treatment of the stream L₀₋₅ in F-1 adopts a clarification-flocculation process with the addition of ferrous salts. **Figure 1** shows that the stream L₀₁₋₅ leaving the unit S-2 is sent to the flocculation tank F-1, while the stream of ferrous salts is dosed to the unit F-1. A strong base must also be added to the unit F-1. The aim of this unit is to totally convert chlorine-based contaminants into chlorides Cl⁻, using a process based on the reaction (R6):

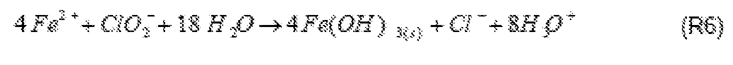

The equation (R6) shows that Fe²⁺ oxidises to Fe³⁺ with formation of Fe(OH)₃₍ₛ₎, a poorly soluble compound, while ClO₂⁻ is reduced to Cl⁻. [S. Sabrina and C. Collivignarelli ("Chlorite removal with ferrous ions." Desalination 176.1-3 (2005): 267-271*)]* have confirmed that the reduction process is selective also towards species such as ClO₂, Cl₂, ClO⁻ and ClO₃⁻. In addition, the authors have also observed that the complete flocculation with a mixing speed of 120 rpm occurs after about 60 to 90 seconds with a stoichiometric addition of Fe²⁺ with respect to ClO₂⁻. The volume of this equipment will be determined starting from the knowledge of the flow rate of liquid of the stream L₀₁₋₅ and the characteristic time of the clarification-flocculation process (understood as floccule formation). The process requires a suitable filtration step to remove the precipitate Fe(OH)₃₍ₛ₎ from the liquid.

After verification of the concentrations of specific pollutants indicated in the reference regulations for fertiliser production, the effluent L₀₁₋₆ after treatment is stored and can be used as a raw material for the processes of nitrogen-based fertiliser production (i.e. ammonium sulphate (NH₄)₂SO₄, ammonium nitrate (NH₄)NO₃ and ammonium chloride (NH₄)Cl). In addition, the ferric hydroxide Fe(OH)₃₍ₛ₎ collected at the bottom of the tank is stored and once purified can be used in waste water treatment.

The advantages of the process and plant according to the invention are set out below:
- Simultaneous removal of SOₓ and NOₓ
- Optimisation of reagent consumption
- Minimisation of the effluents at the outlet from the process
- Use of liquid effluent at the outlet from the plant in nitrogen-based fertiliser production processes
- Obtaining products destined to waste water treatment The following examples are given to illustrate the invention and are not to be considered as limiting the scope of the invention.

### Examples

Calculations were carried out applied to a case study that involves the treatment of an exhaust gas deriving from a combustion plant, installed on land, with a flow rate of fumes to be treated equal to 1 105 kg/h and characterised by a composition of SO₂ equal to 1000 ppmv, NOₓ equal to 1500 ppmv, CO at 200 ppmv, CO₂ at 6% v/v and H₂O₍ᵥ₎ equal to 5.00% w/w. The following have also been set:
- the distribution rate of the stream L₀ at the valve SV-1 (r_{SV-1} = 0.9946);
- the distribution rate of the stream G₀ at the valve SV-2 (r_{SV-2} = 0.9975);
- the distribution rate of the stream L₀₁₋₂ at the valve SV-3 (r_{SV-3} = 0.9930).

The calculations are carried out using the process configuration shown in **Figure 1****,** which involves the use of three flushing units or columns (S-1, S-2 and S-3) or a single column divided into three separate sections, and a flocculation unit F-1.

The results obtained from the calculation code were validated with experiments on a pilot-scale experimental plant.

Following the diagram shown in **Figure 1****,** the exhaust gases *G* are cooled in the exchanger with energy recovery *C-1* up to a temperature of 60 °C before being treated in the plant. After cooling, the stream *G₀* has a relative humidity equal to 79.64% at a temperature of 60 °C. The energy recovery achieved in the unit C-1 during the cooling of *G* is equal to 11.24 MW/h.

The exhaust gases *G₀* are distributed into two lines in the valve *SV-2:* the first line (*G₀₁*) is conveyed to *S-1* and the second line (*G₀₂*) towards *S-2.*

The unit S-1 is equipped with structured filling (e.g. Mellapak 250.X made of stainless steel or polypropylene) and is fed by the stream of gas (*G₀₁* and *G₀₃*) of flow rate 99991.72 kg/h and an absorbing stream of liquid *L₀₁₋₁* of flow rate 199983.44 kg/h at 58 °C, pH= 3.0, and content of NaClO₂ = 0.82% w/w coming from the mixing tank *M-1.*

The tank *M-1* has a total volume equal to 6 m³ with a mixing speed of 120 rpm and is operated with: the make-up stream of liquid *L₀₁* coming from the distribution valve *SV-1* of flow rate 1359.60 kg/h at 20 °C, pH = 7.6, SO₄²⁻ = 0.01 g/L, NO₃⁻ = 0.004 g/L, Cl⁻ = 0.01 g/L and HCO₃⁻ = 0.12 g/L; the recirculation stream of the oxidising reagent *L₀₁₋₃* coming from the distribution valve *SV-3* of flow rate 197637.02 kg/h at 58 °C and pH = 1.19; the make-up stream of oxidising reagent *NaClO₂* of flow rate 547.35 kg/h dosed in powder; the strong base stream with flow rate 439.47 kg/h, e.g. NaOH₍ₛ₎ dosed in pellets to control the final pH after mixing.

The unit *S-1* has a diameter of 4.7 m and has been designed to operate at a maximum value of 85% of the flooding value corresponding to a pressure drop per filling metre of 0.42 mbar/m. Calculations predict a filling height of 0.80 m for Mellapak 250.X to obtain SO₂ and NOₓ emissions < 1 ppmv. The exhaust gases (*G₀₄*) exiting *S-1* are characterised by a flow rate of 100944.93 kg/h, temperature of 52 °C, relative humidity equal to 99.81%, SO₂ < 1 ppmv, NOₓ < 1 ppmv, ClO₂ < 1.20 ppmv, Cl₂ < 22.45 ppmv. The stream of gas *G₀₄* is then conveyed in the refining unit *S-3* to reduce chlorine gas, ClO₂ and Cl₂ emissions. The unit S-3 is equipped with structured filling (e.g. Mellapak 250.X in stainless steel or polypropylene) and is fed by the stream of gas *G₀₄* and a fresh mains water stream *L₀₂* coming from the distribution valve *SV-1.* The stream *L₀₂* has a flow rate of 250568.02 kg/h and the same chemical and physical properties as *L₀₁* (20 °C, pH = 7.6, SO₄²⁻ = 0.01 g/L, NO₃⁻ = 0.004 g/L, Cl⁻ = 0.01 g/L and HCO3⁻ = 0.12 g/L). The total stream of liquid sent to the plant (*L₀*) is equal to 251927.62 kg/h and its chemical and physical properties are the same as those of *L₀₁* and *L₀₂.* The unit S-3 has a diameter of 4.8 m and operates at a maximum value of 85% from the flooding value corresponding to a pressure drop per filling metre of 0.40 mbar/m.

For calculation purposes, the chlorine gas emissions from *G₀₅* were reduced below the limits recommended by the safety data sheets (ClO₂ < 0.16 ppmv and Cl₂ < 3.00 ppmv, which represent the TLV - C, Threshold Limit Value - Ceiling values) while the emissions of chlorine-based compounds in the effluent *L₀₂₋₁* were reduced below the limits recommended by the World Health Organisation, WHO (ClO₂⁻<0.7 mg/L, ClO₃⁻<0.7 mg/L, ClO₂ <0.8 mg/L and Cl₂ <0.2 mg/L). The process requires a packing height of Mellapak 250.X and a base flow rate (NaOH₍ₛ₎) equal to 1.08 m and 6 kg/h, respectively. The stream of sodium hydroxide in solid state is added to the stream *L₀₂* in the mixing unit M-2 with a volume equal to 8 m³.

The stream of gas *G₀₅* treated in S-3 is characterised by a flow rate of 100218.10 kg/h, temperature of 46 °C, relative humidity equal to 99.88%, SO₂ << 1 ppmv, NOₓ << 1 ppmv, ClO₂ = 0.02 ppmv, Cl₂ = 0.50 ppmv, H₂O = 5.50% w/w. The stream of liquid *L₀₂₋₁* at the outlet from S-3 is characterised by a flow rate of 251300.85 kg/h, temperature of 19 °C, pH = 6.97, ClO₂^{- -} = 0.56 mg/L, ClO₃⁻= 0.69 mg/L, ClO₂ = 0.09 mg/L and Cl₂ = 0.11 mg/L.

The flushing waters coming from S-1 are distributed in the valve SV-3: a first liquid stream (*L₀₁₋₃*) that recirculates the oxidising reagent to the unit S-1 and a purge stream *L₀₁₋₄* sent to the effluent treatment section. The liquid stream *L₀₁₋₄* has a flow rate of 1393.21 kg/h, temperature of 59 °C, pH = 1.19, and a total concentration of the chlorine-based contaminants, also named ClO⁻_{2eq}, equal to 4.15 g/L. The first effluent treatment unit S-2 is fed by *L₀₁₋₄* in counter-current to the gaseous stream *G₀₂* coming from the distribution valve SV-2. The stream has a flow rate of 261.87 kg/h and chemical and physical properties equal to G₀₁. The unit *S-2* has a diameter of 0.27 m and has been designed to operate at a maximum value of 85% of the flooding value corresponding to a pressure drop per filling metre of 0.36 mbar/m. Calculations predict a filling height of 0.55 m for Mellapak 250.X to obtain SO₂ and NOₓ emissions < 1 ppmv. The exhaust gases (*G₀₃*) exiting *S-2* are characterised by a flow rate equal to 253.34 kg/h, temperature of 59 °C, relative humidity equal to 100%, SO₂ < 1 ppmv, NOₓ < 1 ppmv, ClO₂ = 0.60 ppmv, Cl₂ = 11.30 ppmv. The stream of liquid (*L₀₁₋₅*) exiting *S-2* is sent to the last treatment step which consists of a clarification-flocculation unit F-1, with a flow rate equal to 1401.74 kg/h, temperature of 42°C, pH = 1.09 and a total concentration of the chlorine-based contaminants, ClO⁻_{2eq} = 3.38 g/L. The treatment unit F-1 is also fed with a stream of FeCl₂ with a flow rate of 35.66 kg/h in powder and base one (NaOH₍ₛ₎) with a flow rate of 27.11 kg/h in pellets. The volume of the unit F-1 is equal to 0.023 m³ and the total concentration of the chlorine-based contaminants, ClO⁻_{2eq} << 1 mg/L in the liquid stream *L₀₁₋₆.* This stream is characterised by a flow rate of 1434.45 kg/h, temperature of 42°C, pH = 3.00, SO₄²⁻ = 19% w/w, NO₃⁻ = 32% w/w, Cl⁻ = 29% w/w. The compositions make this stream potentially suitable for use as a raw material in nitrogen-based fertiliser production processes (i.e. ammonium sulphate (NH₄)₂SO₄, ammonium nitrate (NH₄)NO₃ ammonium chloride (NH₄)Cl). Furthermore, a stream of Fe(OH)₃ with flow rate equal to 30.06 kg/h is produced at the outlet from F-1 and which can be used in the water treatment processes (for example for the removal of arsenic and phosphates).

## Claims

1. Process for the treatment of an exhaust gas polluted by SOₓ and NOₓ wherein a flow of said gas is treated with an oxidising reagent in a treatment plant to remove the pollutants from the flow of gas, said process comprising the following fundamental steps:
(i). Preparing the oxidising reagent in a mixing unit M-1 fed by an aliquot of water L₀₁ at the inlet and by an aqueous stream of recirculation reagent L₀₁₋₃, the aliquot of water L₀₁ deriving from splitting water L₀ at the inlet to the plant into two aliquots, first aliquot L₀₁ and second aliquot L₀₂ of water, the recirculation reagent L₀₁₋₃ being an aliquot deriving from splitting the treatment liquid L₀₁₋₂ exiting a first treatment unit S-1, containing sulphates and nitrates deriving from the previous absorption of SOₓ and NOₓ in said first unit S-1, the oxidising reagent so prepared being withdrawn from the mixing unit as a stream of oxidising reagent L₀₁₋₁ which is sent to said first treatment unit S-1;
(ii). Splitting the flow of gas entering the plant G₀ into a first aliquot of gas G₀₁ and a second aliquot of gas G₀₂ and sending said first aliquot of gas G₀₁ to the first treatment unit S-1 and said second aliquot of gas G₀₂ to a second treatment unit S-2;
(iii). Bringing the first aliquot of gas G₀₁ into contact with the aqueous stream of oxidising reagent L₀₁₋₁, withdrawn from the mixing unit M-1 and which feeds the first treatment unit S-1 at the inlet;
(iv). Withdrawing at the outlet from the first treatment unit S-1 the treated gas G₀₄ and the treatment liquid L₀₁₋₂, polluted with the pollutants SOₓ and NOₓ following the contact with the treated exhaust gas,
(v). Splitting the treatment liquid L₀₁₋₂ into a first aliquot or recirculation reagent L₀₁₋₃ which is recirculated by sending it to the mixing unit M-1 and into a second aliquot or purge stream L₀₁₋₄ which is sent to a second treatment unit S-2 to treat the second aliquot of gas G₀₂;
(vi). Withdrawing, at the outlet from the second treatment unit S-2, the treatment liquid L₀₁₋₅ which contains sulphates and nitrates deriving from the absorption of the pollutants SOₓ and NOₓ during the contact between the purge stream L₀₁₋₄ and the gas G₀₃ which is sent to the first unit S-1 together with the first aliquot of gas G₀₁.

2. Process according to claim 1 wherein the water L₀ entering the plant is split, by means of a distribution valve SV-1, into the first aliquot of water L₀₁ and into the second aliquot of water L₀₂, which are respectively sent to the mixing unit M-1 and to a gas refining or dechlorination unit S-3 through the first distribution valve SV-1.

3. Process according to claim 2 wherein the refining or dechlorination unit S-3 receives at the inlet the treated gas G₀₄, exiting the treatment unit S-1, and a stream of liquid L₀₂₋₁, prepared in an optional mixing unit M-2 which is in turn fed at the inlet by the aliquot of water L₀₂ coming from the distribution valve SV-1, the stream L₀₂ being optionally added with strong bases in said optional mixing unit M-2 from which the stream of liquid L₀₂₋₁ is withdrawn for a further treatment of the treated gas G₀₄.

4. Process according to any one of claims 1-3 wherein the gas G₀ entering the plant, prior to being treated, is optionally passed through a thermal recovery unit C-1 and then split into the first aliquot of gas G₀₁ and second aliquot of gas G₀₂ sent through a second distribution valve SV-2 to the first treatment unit S-1 and to the second treatment unit S-2, respectively.

5. Process according to any one of claims 1-4 wherein the treatment liquid L₀₁₋₂ withdrawn at the outlet from the first treatment unit S-1 is split into the first aliquot or recirculation reagent L₀₁₋₃ and into the second aliquot L₀₁₋₄, which are sent to the mixing unit M-1 and to the second treatment unit S-2 respectively through a third distribution valve SV-3.

6. Process according to any one of claims 1-5 wherein the treatment liquid L₀₁₋₅ withdrawn at the outlet from the second treatment unit S-2 is sent to a clarification-flocculation unit F-1 to be additivated with a base and with a solution of Fe²⁺ to obtain, after treatment of the liquid, iron hydroxide Fe(OH)₃₍ₛ₎ and a liquid acid stream L₀₁₋₆ containing sulphates, nitrates and chlorides.

7. Process according to any one of claims 1-6 wherein the treatment in the unit F-1 is carried out by means of activated carbons.

8. Process according to any one of claims 2-7 wherein the treated gas G₀₄ withdrawn from the treatment unit S-1 is sent to the unit S-3 to be flushed with the second aliquot of water L₀₂ added with alkali.

9. Process according to any one of claims 1-8 wherein water comprises mains water or sea water or a mixture thereof.

10. Plant for the treatment of an exhaust gas polluted by SOₓ and NOₓ wherein a flow of said gas is treated with an oxidising reagent to remove the pollutants from the gas flow, said plant comprising:
• a mixing unit M-1 comprising mixing means for preparing the oxidising reagent starting from an aliquot of water L₀₁ and fed at the inlet by an aqueous stream of recirculation reagent L₀₁₋₃, the aliquot of water L₀₁ deriving from splitting water L₀ entering the plant into two aliquots, first aliquot L₀₁ and second aliquot L₀₂ of water, the recirculation reagent L₀₁₋₃ being an aliquot deriving from splitting the treatment liquid L₀₁₋₂ at the outlet from a first treatment unit S-1, the oxidising reagent so prepared being withdrawn from the mixing unit M-1 as a stream of oxidising reagent L₀₁₋₁ which is sent to said first treatment unit S-1;
• Means for splitting the flow of gas entering the plant G₀ into a first aliquot of gas G₀₁ and a second aliquot of gas G₀₂ and means for sending said first aliquot of gas G₀₁ to the first treatment unit S-1 and said second aliquot of gas G₀₂ to a second treatment unit S-2;
• Means for entering the first aliquot of gas G₀₁ into the first treatment unit S-1, means for withdrawing the aqueous stream of oxidising reagent L₀₁₋₁ from the mixing unit M-1 and for entering this one into the first treatment unit S-1;
• Means for withdrawing from the first treatment unit S-1 treated gas G₀₄ and treatment liquid L₀₁₋₂, containing sulphates and nitrates resulting from the absorption of SOₓ and NOₓ following the contact with the treated exhaust gas;
• Distribution means for splitting the treatment liquid L₀₁₋₂ into a first aliquot or recirculation reagent L₀₁₋₃ and into a second aliquot or purge stream L₀₁₋₄, means for sending said first aliquot L₀₁₋₃ to the mixing unit M-1 and means for sending the second aliquot L₀₁₋₄ to the second treatment unit S-2;
• Means for withdrawing from the second treatment unit S-2 treatment liquid L₀₁₋₅, which contains the pollutants SOₓ and NOₓ deriving from the contact with the treated exhaust gas; means for withdrawing from the second treatment unit S-2 treated gas G₀₃ and means for sending said gas G₀₃ to the first treatment unit S-1 to be further treated in said unit.

11. Plant according to claim 10 wherein the means for splitting water L₀ entering the plant into a first aliquot L₀₁ and second aliquot of mains water L₀₂ comprise a first distribution valve SV-1, and are assisted by means for sending said aliquots to a mixing unit M-1 and to a third unit S-3, respectively.

12. Plant according to any one of claims 10-11 further comprising a thermal recovery unit C-1 of the gas G₀ entering the plant, means for splitting into the first aliquot of gas G₀₁ and second aliquot of gas G₀₂ by means of a second distribution valve SV-2 and means for sending said first aliquot of gas G₀₁ and second aliquot of gas G₀₂ to the first treatment unit S-1 and to the second treatment unit S-2, respectively.

13. Plant according to any one of claims 10-12 wherein the means for splitting the treatment liquid L₀₁₋₂ into the first aliquot or recirculation reagent L₀₁₋₃ and into the second aliquot or purge reagent L₀₁₋₄, comprise a third distribution valve SV-3, and are assisted by means for withdrawing treatment liquid L₀₁₋₂ from the first treatment unit S-1 and by means for sending said first aliquot L₀₁₋₃ and second aliquot L₀₁₋₄ to the mixing unit M-1 and to the second treatment unit S-2, respectively.

14. Plant according to any one of claims 10-13 further comprising a clarification-flocculation unit F-1 assisted by means for withdrawing treatment liquid L₀₁₋₅ from the second treatment unit S-1 and means for injecting said liquid L₀₁₋₅ into said clarification-flocculation unit F-1.

15. Plant according to any one of claims 10-14 wherein the treatment unit S-1 is provided with means for withdrawing treated gas G₀₄ and means for sending it to the refining unit S-3, which in turn is provided with means for entering the second aliquot of water L₀₂.

## Patentansprüche

1. Verfahren zur Behandlung eines Abgases, das durch SOₓ und NOₓ verunreinigt ist, wobei ein Strom des Gases in einer Behandlungsanlage mit einem oxidierenden Reagenz behandelt wird, um die Schadstoffe aus dem Gasstrom zu entfernen, wobei das Verfahren die folgenden grundlegenden Schritte umfasst:
(i). Herstellen des oxidierenden Reagenzes in einer Mischeinheit M-1, die von einem Aliquot des Wassers L₀₁ an dem Einlass und von einem wässrigen Strom des Rezirkulationsreagenzes L₀₁₋₃ gespeist wird, wobei das Aliquot des Wassers L₀₁ aus der Aufspaltung des Wassers L₀ an dem Einlass der Anlage in zwei Aliquote stammt, das erste Aliquot L₀₁ und das zweite Aliquot L₀₂ des Wassers, wobei das Rezirkulationsreagenz L₀₁₋₃ ein Aliquot ist, das aus der Aufspaltung der Behandlungsflüssigkeit L₀₁₋₂ stammt, die aus einer ersten Behandlungseinheit S-1 austritt, die Sulfate und Nitrate enthält, die aus der vorherigen Absorption von SOₓ und NOₓ in der ersten Einheit S-1 stammen, wobei das derart hergestellte oxidierende Reagenz aus der Mischeinheit als ein Strom des oxidierenden Reagenzes L₀₁₋₁ entnommen wird, der der ersten Behandlungseinheit S-1 gesandt wird;
(ii). Aufteilen des Gasstroms, der in die Anlage G₀ eintritt, in ein erstes Aliquot von Gas G₀₁ und ein zweites Aliquot von Gas G₀₂ und Senden des ersten Aliquots von Gas G₀₁ an die erste Behandlungseinheit S-1 und des zweiten Aliquots von Gas G₀₂ an eine zweite Behandlungseinheit S-2;
(iii). Inkontakbringen des ersten Aliquots des Gases G₀₁ mit dem wässrigen Strom des oxidierenden Reagenzes L₀₁₋₁, der aus der Mischeinheit M-1 entnommen wird und der die erste Behandlungseinheit S-1 an dem Einlass speist;
(iv). Entnehmen an dem Auslass der ersten Behandlungseinheit S-1 des behandelten Gases G₀₄ und der Behandlungsflüssigkeit L₀₁₋₂, die mit den Schadstoffen SOₓ und NOₓ, die nach dem Kontakt mit dem behandelten Abgas verunreinigt sind,
(v). Aufteilen der Behandlungsflüssigkeit L₀₁₋₂ in ein erstes Aliquot oder Rezirkulationsreagenz L₀₁₋₃, das rezirkuliert wird, indem es an die Mischeinheit M-1 gesandt wird, und in einen zweiten Aliquot- oder Spülstrom L₀₁₋₄, der einer zweiten Behandlungseinheit S-2 gesandt wird, um das zweite Aliquot des Gases G₀₂ zu behandeln;
(vi). Entnehmen der Behandlungsflüssigkeit L 01-5 an dem Auslass der zweiten Behandlungseinheit S-2, die Sulfate und Nitrate enthält, die aus der Absorption der Schadstoffe SOₓ und NOₓ während des Kontakts zwischen dem Spülstrom L₀₁₋₄ und dem Gas G₀₃ stammen, das zusammen mit dem ersten Aliquot des Gases G₀₁ an die erste Einheit S-1 gesandt wird.

2. Verfahren nach Anspruch 1, wobei das in die Anlage eintretende Wasser L₀ mittels eines Verteilungsventils SV-1 in die erste Aliquote des Wassers L₀₁ und in die zweite Aliquote des Wassers L₀₂ aufgeteilt wird, die jeweils über das erste Verteilungsventil SV-1 der Mischeinheit M-1 und eine Gasraffinations- oder Entchlorungseinheit S-3 gesandt werden.

3. Verfahren nach Anspruch 2, wobei die Raffinations- oder Entchlorungseinheit S-3 an dem Einlass das aus der Behandlungseinheit S-1 austretende behandelte Gas G₀₄ und einen in einer optionalen Mischeinheit M-2 hergestellten Flüssigkeitsstrom L₀₂₋₁ empfängt, der wiederum an dem Einlass von dem von dem Verteilungsventil SV-1 kommenden Aliquot des Wassers L₀₂ eingespeist wird, wobei der Strom L₀₂ optional mit starken Basen in der optionalen Mischeinheit M-2 zugegeben wird, aus der der Flüssigkeitsstrom L₀₂₋₁ für eine weitere Behandlung des behandelten Gases G₀₄ entnommen wird.

4. Verfahren nach einem der Ansprüche 1-3, wobei das Gas G₀, das in die Anlage eintritt, bevor es behandelt wird, optional durch eine Wärmerückgewinnungseinheit C-1 gesandt wird und dann in das erste Aliquot des Gases G₀₁ und das zweite Aliquot des Gases G₀₂ aufgeteilt wird, die durch ein zweites Verteilungsventil SV-2 an die erste Behandlungseinheit S-1 bzw. an die zweite Behandlungseinheit S-2 gesandt werden.

5. Verfahren nach einem der Ansprüche 1-4, wobei die an dem Auslass aus der ersten Behandlungseinheit S-1 entnommene Behandlungsflüssigkeit L₀₁₋₂ in das erste Aliquot oder Rezirkulationsreagenz L₀₁₋₃ und in das zweite Aliquot L₀₁₋₄ aufgeteilt wird, die durch ein drittes Verteilungsventil SV-3 an die Mischeinheit M-1 bzw. an die zweite Behandlungseinheit S-2 gesandt werden.

6. Verfahren nach einem der Ansprüche 1-5, wobei die an dem Auslass der zweiten Behandlungseinheit S-2 entnommene Behandlungsflüssigkeit L₀₁₋₅ zu einer Klär-Flockungseinheit F-1 gesandt wird, um mit einer Base und einer Lösung von Fe²⁺ additiviert zu werden, um nach der Behandlung der Flüssigkeit Eisenhydroxid Fe(OH)₃₍ₛ₎ und einen flüssigen Säurestrom L₀₁₋₆ zu erhalten, der Sulfate, Nitrate und Chloride enthält.

7. Verfahren nach einem der Ansprüche 1-6, wobei die Behandlung in der Einheit F-1 mittels Aktivkohlen durchgeführt wird.

8. Verfahren nach einem der Ansprüche 2-7, wobei das aus der Behandlungseinheit S-1 entnommene behandelte Gas G₀₄ an die Einheit S-3 gesandt wird, um mit dem zweiten Aliquot des Wassers L₀₂, dem Alkali zugesetzt ist, gespült zu werden.

9. Verfahren nach einem der Ansprüche 1-8, wobei Wasser Leitungswasser oder Meerwasser oder ein Gemisch davon umfasst.

10. Anlage zur Behandlung eines durch SOₓ und NOₓ verunreinigten Abgases, wobei ein Strom des Gases mit einem oxidierenden Reagenz behandelt wird, um die Schadstoffe aus dem Gasstrom zu entfernen, wobei die Anlage Folgendes umfasst:
• eine Mischeinheit M-1, die Mischmittel zum Herstellen des oxidierenden Reagenzes ausgehend von einem Aliquot des Wassers L₀₁, das an dem Einlass durch einen wässrigen Strom von Rezirkulationsreagenz L₀₁₋₃ eingespeist wird, umfasst, wobei das Aliquot des Wassers L₀₁ aus der Aufspaltung des Wassers L₀ stammt, das in die Anlage eintritt, in zwei Aliquote, das erste Aliquot L₀₁ und das zweite Aliquot L ₀₂ des Wassers, wobei das Rezirkulationsreagenz L₀₁₋₃ ein Aliquot ist, das aus der Aufspaltung der Behandlungsflüssigkeit L₀₁₋₂ an dem Auslass einer ersten Behandlungseinheit S-1 stammt, wobei das derart hergestellte oxidierende Reagenz als ein Strom von oxidierendem Reagenz L₀₁₋₁ aus der Mischeinheit M-1 entnommen wird, der der ersten Behandlungseinheit S-1 gesandt wird;
• Mittel zum Aufteilen des Gasstroms, der in die Anlage G₀ eintritt, in ein erstes Aliquot von Gas G₀₁ und ein zweites Aliquot von Gas G₀₂, und Mittel zum Senden des ersten Aliquots von Gas G₀₁ an die erste Behandlungseinheit S-1 und des zweiten Aliquots von Gas G₀₂ an eine zweite Behandlungseinheit S-2;
• Mittel zum Einleiten des ersten Aliquots des Gases G₀₁ in die erste Behandlungseinheit S-1, Mittel zum Entnehmen des wässrigen Stroms des oxidierenden Reagenzes L₀₁₋₁ aus der Mischeinheit M-1 und zum Einleiten dieses in die erste Behandlungseinheit S-1;
• Mittel zum Entnehmen aus der ersten Behandlungseinheit S-1 von behandeltem Gas G₀₄ und Behandlungsflüssigkeit L₀₁₋₂, die Sulfate und Nitrate enthalten, die aus der Absorption von SOₓ und NOₓ nach dem Kontakt mit dem behandelten Abgas resultieren;
• Verteilungsmittel zum Aufteilen der Behandlungsflüssigkeit L₀₁₋₂ in ein erstes Aliquot oder Rezirkulationsreagenz L₀₁₋₃ und in ein zweites Aliquot oder Spülstrom L₀₁₋₄, Mittel zum Senden des ersten Aliquots L₀₁₋₃ an die Mischeinheit M-1 und Mittel zum Senden des zweiten Aliquots L₀₁₋₄ an die zweite Behandlungseinheit S-2;
• Mittel zum Entnehmen von Behandlungsflüssigkeit L 01-5 aus der zweiten Behandlungseinheit S-2, die die Schadstoffe SOₓ und NOₓ enthält, die aus dem Kontakt mit dem behandelten Abgas stammen; Mittel zum Entnehmen von behandeltem Gas G₀₃ aus der zweiten Behandlungseinheit S-2, und Mittel zum Senden dieses Gases G₀₃ an die erste Behandlungseinheit S-1, um in dieser weiter behandelt zu werden.

11. Anlage nach Anspruch 10, wobei die Mittel zum Aufteilen des in die Anlage eintretenden Wassers L₀ in ein erstes Aliquot L₀₁ und ein zweites Aliquot des Leitungswassers L₀₂ ein erstes Verteilungsventil SV-1 umfassen und durch Mittel zum Senden der Aliquots an eine Mischeinheit M-1 bzw. an eine dritte Einheit S-3 unterstützt werden.

12. Anlage nach einem der Ansprüche 10-11, die ferner eine Wärmerückgewinnungseinheit C-1 des in die Anlage eintretenden Gases G₀, ein Mittel zum Aufteilen in das erste Aliquot des Gases G₀₁ und das zweite Aliquot des Gases G₀₂ mittels eines zweiten Verteilungsventils SV-2 und ein Mittel zum Senden des ersten Aliquots des Gases G₀₁ und des zweiten Aliquots des Gases G₀₂ an die erste Behandlungseinheit S-1 bzw. an die zweite Behandlungseinheit s-2 umfasst.

13. Anlage nach einem der Ansprüche 10-12, wobei die Mittel zum Aufteilen der Behandlungsflüssigkeit L₀₁₋₂ in das erste Aliquot oder Rezirkulationsreagenz L₀₁₋₃ und in das zweite Aliquot oder Spülreagenz L₀₁₋₄ ein drittes Verteilungsventil SV-3 umfassen und durch Mittel zum Entnehmen von Behandlungsflüssigkeit L₀₁₋₂ aus der ersten Behandlungseinheit S-1 und durch Mittel zum Senden des ersten Aliquots L₀₁₋₃ und des zweiten Aliquots L₀₁₋₄ an die Mischeinheit M-1 bzw. an die zweite Behandlungseinheit S-2 unterstützt sind.

14. Anlage nach einem der Ansprüche 10-13, die ferner eine Klär-Flockungs-Einheit F-1, umfasst, die durch Mittel zum Entnehmen von Behandlungsflüssigkeit L 01-5 aus der zweiten Behandlungseinheit S-1 und Mittel zum Einspritzen der Flüssigkeit L 01-5 in die Klär-Flockungs-Einheit F-1 unterstützt ist.

15. Anlage nach einem der Ansprüche 10-14, wobei die Behandlungseinheit S-1 mit Mitteln zum Entnehmen von behandeltem Gas G₀₄ und Mitteln, um dieses an die Raffinationseinheit S-3 zu senden, versehen ist, die wiederum mit Mitteln zum Eintreten in das zweite Aliquot des Wassers L₀₂ versehen ist.

## Revendications

1. Procédé de traitement d'un gaz d'échappement pollué par des SOₓ et des NOₓ dans lequel un flux dudit gaz est traité avec un réactif oxydant dans une installation de traitement pour éliminer les polluants du flux de gaz, ledit procédé comprenant les étapes fondamentales suivantes :
(i). Préparation du réactif oxydant dans une unité de mélange M-1 alimentée par une aliquote d'eau L₀₁ à l'entrée et par un courant aqueux de réactif de recirculation L₀₁₋₃, l'aliquote d'eau L₀₁ provenant de la division de l'eau L₀ à l'entrée de l'installation en deux aliquotes, la première aliquote L₀₁ et la seconde aliquote L₀₂ d'eau, le réactif de recirculation L₀₁₋₃ étant une aliquote provenant de la division du liquide de traitement L₀₁₋₂ sortant d'une première unité S-1 de traitement, contenant des sulfates et des nitrates provenant de l'absorption précédente de SOₓ et de NOₓ dans ladite première unité S-1, le réactif oxydant ainsi préparé étant retiré de l'unité de mélange en tant que courant de réactif oxydant L₀₁₋₁ qui est envoyé à ladite première unité S-1 de traitement ;
(ii). Division du flux de gaz entrant dans l'installation G₀ en une première aliquote de gaz G₀₁ et une seconde aliquote de gaz G₀₂ et envoi de ladite première aliquote de gaz G₀₁ à la première unité S-1 de traitement et de ladite seconde aliquote de gaz G₀₂ à une deuxième unité S-2 de traitement ;
(iii). Mise en contact de la première aliquote de gaz G₀₁ avec le courant aqueux de réactif oxydant L₀₁₋₁, retiré de l'unité de mélange M-1 et qui alimente la première unité S-1 de traitement à l'entrée ;
(iv). Retrait à la sortie de la première unité S-1 de traitement du gaz traité G₀₄ et du liquide de traitement L₀₁₋₂, pollués par les polluants SOₓ et NOₓ à la suite du contact avec le gaz d'échappement traité,
(v). Division du liquide de traitement L₀₁₋₂ en une première aliquote ou un réactif de recirculation L₀₁₋₃ que l'on fait recirculer en l'envoyant à l'unité de mélange M-1 et en une seconde aliquote ou un flux de purge L₀₁₋₄ qui est envoyé à une deuxième unité S-2 de traitement pour traiter la seconde aliquote de gaz G₀₂ ;
(vi). Retrait, à la sortie de la deuxième S-2 unité de traitement, du liquide de traitement L₀₁₋₅ qui contient des sulfates et des nitrates provenant de l'absorption des polluants SOₓ et NOₓ lors du contact entre le courant de purge L₀₁₋₄ et le gaz G₀₃ qui est envoyé à la première unité S-1 conjointement avec la première aliquote de gaz G₀₁.

2. Procédé selon la revendication 1, dans lequel l'eau L₀ entrant dans l'installation est divisée, au moyen d'une vanne de distribution SV-1, en la première aliquote d'eau L₀₁ et en la seconde aliquote d'eau L₀₂, qui sont respectivement envoyées à l'unité de mélange M-1 et à une unité de raffinage ou de déchloration S-3 de gaz à travers la première vanne de distribution SV-1.

3. Procédé selon la revendication 2, dans lequel l'unité de raffinage ou de déchloration S-3 reçoit à l'entrée le gaz traité G₀₄, sortant de l'unité S-1 de traitement, et un courant de liquide L₀₂₋₁, préparé dans une unité de mélange optionnelle M-2 qui est à son tour alimentée à l'entrée par l'aliquote d'eau L₀₂ provenant de la vanne de distribution SV-1, le courant L₀₂ étant éventuellement ajouté avec des bases fortes dans ladite unité de mélange optionnelle M-2 à partir de laquelle le courant de liquide L₀₂₋₁ est retiré pour un traitement supplémentaire du gaz traité G₀₄.

4. Procédé selon l'une quelconque des revendications 1 à 3, dans lequel le gaz G₀ entrant dans l'installation, avant d'être traité, est éventuellement passé à travers une unité de récupération thermique C-1, puis divisé en la première aliquote de gaz G₀₁ et la seconde aliquote de gaz G₀₂ envoyées à travers une deuxième vanne de distribution SV-2 à la première unité S-1 de traitement et à la deuxième unité de traitement S-2, respectivement.

5. Procédé selon l'une quelconque des revendications 1 à 4, dans lequel le liquide de traitement L₀₁₋₂ retiré à la sortie de la première unité S-1 de traitement est divisé en la première aliquote ou le réactif de recirculation L₀₁₋₃ et en la seconde aliquote L₀₁₋₄, qui sont envoyées à l'unité de mélange M-1 et à la deuxième unité S-2 de traitement respectivement par l'intermédiaire d'une troisième vanne de distribution SV-3.

6. Procédé selon l'une quelconque des revendications 1 à 5, dans lequel le liquide de traitement L₀₁₋₅ retiré à la sortie de la deuxième unité S-2 de traitement est envoyé à une unité de clarification-floculation F-1 pour être additivé avec une base et avec une solution de Fe²⁺ pour obtenir, après traitement du liquide, de l'hydroxyde de fer Fe(OH)₃₍ₛ₎ et un courant d'acide liquide L₀₁₋₆ contenant des sulfates, des nitrates et des chlorures.

7. Procédé selon l'une quelconque des revendications 1 à 6, dans lequel le traitement dans l'unité F-1 est effectué au moyen de charbons actifs.

8. Procédé selon l'une quelconque des revendications 2 à 7, dans lequel le gaz traité G₀₄ retiré de l'unité S-1 de traitement est envoyé à l'unité S-3 pour être rincé avec la seconde aliquote d'eau L₀₂ à laquelle un alcali a été ajouté.

9. Procédé selon l'une quelconque des revendications 1 à 8, dans lequel l'eau comprend de l'eau courante ou de l'eau de mer ou un mélange de celles-ci.

10. Installation pour le traitement d'un gaz d'échappement pollué par des SOₓ et des NOₓ dans laquelle un flux dudit gaz est traité avec un réactif oxydant pour éliminer les polluants du flux de gaz, ladite installation comprenant :
• une unité de mélange M-1 comprenant des moyens de mélange pour préparer le réactif oxydant à partir d'une aliquote d'eau L₀₁ et alimentée à l'entrée par un courant aqueux de réactif de recirculation L₀₁₋₃, l'aliquote d'eau L₀₁ provenant de la division de l'eau L₀ entrant dans l'installation en deux aliquotes, la première aliquote L₀₁ et la seconde aliquote L₀₂ d'eau, le réactif de recirculation L₀₁₋₃ étant une aliquote provenant de la division du liquide de traitement L₀₁₋₂ à la sortie d'une première unité S-1 de traitement, le réactif oxydant ainsi préparé étant retiré de l'unité de mélange M-1 en tant que courant de réactif oxydant L₀₁₋₁ qui est envoyé à ladite première unité S-1 de traitement ;
• Des moyens de division du flux de gaz entrant dans l'installation G₀ en une première aliquote de gaz G₀₁ et une seconde aliquote de gaz G₀₂ et des moyens d'envoi de ladite première aliquote de gaz G₀₁ à la première unité S-1 de traitement et de ladite seconde aliquote de gaz G₀₂ à une deuxième unité S-2 de traitement ;
• Des moyens d'entrée de la première aliquote de gaz G₀₁ dans la première unité S-1 de traitement, des moyens de retrait du courant aqueux de réactif oxydant L₀₁₋₁ de l'unité de mélange M-1 et d'entrée de celui-ci dans la première unité S-1 de traitement ;
• Des moyens pour retirer de la première unité S-1 de traitement le gaz traité G₀₄ et le liquide de traitement L₀₁₋₂, contenant des sulfates et des nitrates résultant de l'absorption de SOₓ et de NOₓ à la suite du contact avec le gaz d'échappement traité ;
• Des moyens de distribution pour diviser le liquide de traitement L₀₁₋₂ en une première aliquote ou un réactif de recirculation L₀₁₋₃ et en une seconde aliquote ou un courant de purge L₀₁₋₄, des moyens d'envoi de ladite première aliquote L₀₁₋₃ à l'unité de mélange M-1 et des moyens d'envoi de la seconde aliquote L₀₁₋₄ à la deuxième unité de traitement S-2 ;
• Des moyens pour retirer de la deuxième unité S-2 de traitement le liquide de traitement L₀₁₋₅, qui contient les polluants SOₓ et NOₓ provenant du contact avec le gaz d'échappement traité ; des moyens pour retirer de la deuxième unité S-2 de traitement le gaz traité G₀₃ et des moyens pour envoyer ledit gaz G₀₃ à la première unité S-1 de traitement pour être traité davantage dans ladite unité.

11. Installation selon la revendication 10, dans laquelle les moyens de division de l'eau L₀ entrant dans l'installation en une première aliquote L₀₁ et une seconde aliquote d'eau courante L₀₂ comprennent une première vanne de distribution SV-1, et sont assistés par des moyens d'envoi desdites aliquotes à une unité de mélange M-1 et à une troisième unité S-3, respectivement.

12. Installation selon l'une quelconque des revendications 10 et 11, comprenant en outre une unité de récupération thermique C-1 du gaz G₀ entrant dans l'installation, des moyens de division en la première aliquote de gaz G₀₁ et la seconde aliquote de gaz G₀₂ au moyen d'une deuxième vanne de distribution SV-2 et des moyens d'envoi de ladite première aliquote de gaz G₀₁ et de ladite seconde aliquote de gaz G₀₂ à la première unité S-1 de traitement et à la deuxième unité S-2 de traitement, respectivement.

13. Installation selon l'une quelconque des revendications 10 à 12, dans laquelle les moyens de division du liquide de traitement L₀₁₋₂ en la première aliquote ou le réactif de recirculation L₀₁₋₃ et en la seconde aliquote ou le réactif de purge L₀₁₋₄, comprennent une troisième vanne de distribution SV-3, et sont assistés par des moyens pour retirer le liquide de traitement L₀₁₋₂ de la première unité S-1 de traitement et par des moyens pour envoyer ladite première aliquote L₀₁₋₃ et ladite seconde aliquote L₀₁₋₄ à l'unité de mélange M-1 et à la deuxième unité S-2 de traitement, respectivement.

14. Installation selon l'une quelconque des revendications 10 à 13, comprenant en outre une unité de clarification-floculation F-1 assistée par des moyens pour retirer le liquide de traitement L₀₁₋₅ de la deuxième unité S-1 de traitement et des moyens pour injecter ledit liquide L₀₁₋₅ dans ladite unité de clarification-floculation F-1.

15. Installation selon l'une quelconque des revendications 10 à 14, dans laquelle l'unité S-1 de traitement est pourvue de moyens pour retirer le gaz traité G₀₄ et de moyens pour l'envoyer à l'unité de raffinage S-3, qui à son tour est pourvue de moyens pour faire entrer la seconde aliquote d'eau L₀₂.
